# EUROPÄISCHE PATENTSCHRIFT

(11) **EP 1 896 523 B1**
(45) Veröffentlichungstag und Bekanntmachung des Hinweises auf die Patenterteilung: **27.10.2010**
(21) Anmeldenummer: 06743057.9
(22) Anmeldetag: 24.05.2006
(51) Int. Cl.: C08G 77/38, C08G 77/50, C08G 18/71, C08G 18/83, C08G 18/10, C08G 63/695, C08G 65/336, C08F 8/00, C08G 85/00, C08G 59/14

(54) **KONTINUIERLICHE POLYMERANALOGE UMSETZUNG VON REAKTIVEN SILANMONOMEREN MIT FUNKTIONALISIERTEN POLYMEREN**
CONTINUOUS POLYMER-ANALOGOUS REACTION OF REACTIVE SILANE MONOMERS WITH FUNCTIONALISED POLYMERS
TRANSFORMATION CONTINUE DE POLYMERES ANALOGUES DE MONOMERES DE SILANE REACTIFS AVEC DES POLYMERES FONCTIONNALISES

(30) Priorität: 23.06.2005 DE 102005029169
(43) Veröffentlichungstag der Anmeldung: 12.03.2008
(73) Patentinhaber: Wacker Chemie AG, 81737 München (DE)
(72) Erfinder: BAUMANN, Frank, 84529 Tittmoning (DE); SCHINDLER, Wolfram, 84577 Tüssling (DE); FREY, Thomas, 84489 Burghausen (DE); SCHRÖDER-EBENSPERGER, Achim, 84489 Burghausen (DE)
(74) Vertreter: Fritz, Helmut
(86) Internationale Anmeldenummer: PCT/EP2006/004963
(87) Internationale Veröffentlichungsnummer: WO 2006/136261

(56) Entgegenhaltungen:
- EP-A- 1 535 940
- WO-A-03/018658
- DE-B- 1 243 807
- US-A- 4 104 144
- US-A- 6 162 862
- US-B1- 6 350 824
- G. Oertel (Hrsg.): "Polyurethane Kunststoff Handbuch" 1983, Carl Hanser Verlag München Wien ISBN: 3-446-13614-2 vol. 7, , pages 86-87

## Beschreibung

Die Erfindung betrifft ein kontinuierliches Verfahren zur Herstellung von Polymeren mit Silanendgruppen durch polymeranaloge kontinuierliche Umsetzung von reaktiven Silanmonomeren mit funktionalisierten Polymeren.

Die Änderung der Funktionalisierung von Oligomeren und Polymeren durch polymeranaloge Umsetzungen ist ein wichtiger Prozessschritt in der chemischen Industrie. Dadurch können die Eigenschaften von Polymeren auf das jeweilige Anwendungsgebiet maßgeschneidert werden. So können z. B die Reaktivität, die Vernetzungscharakteristik, die Haftung, die Löslichkeit, die Morphologie, die thermische Beständigkeit usw. eingestellt werden. Beispiele für polymeranaloge Umsetzungen sind die Hydrolyse von Polyvinylacetat zu Polyvinylalkohol, die Hydrosilylierung von H-Gruppen tragenden Polysiloxanen mit Olefinen, die Quarternisierung von Polyvinylpyridin. Daneben spielt auch die Funktionalisierung von Oligomeren und Polymeren mit reaktiven Gruppen eine wichtige Reaktion dar. Besonders von Interesse ist hier auch der Einbau von monomeren, reaktiven Silangruppen. Vielfach werden dazu funktionalisierte Polymere wie OH-, NH- oder SH-haltige Polyether, Polyester, Polyurethane oder Polysulfide mit Isocyanatosilanen umgesetzt oder auch isocyanatfunktionelle Polymere durch einfache Reaktion mit Aminosilanen verkappt.

Für einen Teil dieser polymeranalogen Umsetzungen, wie z. B. der Hydrosilylierung wurden bereits kontinuierliche Verfahren in US-A-6350824 beschrieben und durchgeführt.

Dabei sind kontinuierliche Verfahren den Batchprozeßen in den folgenden Punkten überlegen:
- gleich bleibende Produktqualität, d.h. Verminderung der Nebenreaktionen, kurze thermische Belastung von Ausgangsmaterialien und Produkten, erhöhte Selektivität der Reaktion;
- hohe Raum-Zeitausbeute, d. h. hoher Mengenausstoß bei gleichzeitig geringen Reaktor hold up, dadurch auch bei sicherheitstechnischen sowie toxikologisch Aspekten dem Batchprozeß überlegen;
- Mehrstufenreaktionen ohne Rückvermischung möglich, d. h.
   Aktivierung und Desaktivierung finden in getrennten Anlagenteilen statt;
- Minimierung des Abfalls somit Herstellkostenminimierung durch Minimierung bzw. Wegfall von Lösemitteln bei inhomogenen Systemen;
- Mischung von hoch viskosen Produkten ist in kontinuierlichen Mischern besser;
- Ein weiterer Vorteil von kontinuierlichen Verfahren ist, dass man durch in-line Analytik die Qualität des erhaltenen Produktes während des laufenden Produktionsprozesses durch Anpassung von Reaktionsparametern, wie Verweilzeit, Temperaturprofile Stöchometrie der eingesetzten Komponenten etc. steuern kann. Zudem können diese Verfahren einfacher optimiert werden und damit ist ein effizienterer Rohstoffeinsatz möglich.

Nach bisherigem Stand der Technik wird die Funktionalisierung von Polymeren mit Isocyanatosilanen oder Aminosilanen nur in Batchprozessen durchgeführt. Typische Beispiele für diese Umsetzungen werden in EP 931 800 B1, US 5,068,304, DE 198 49 817 oder WO 03/018658 beschrieben. In keinen der bisher publizierten Verfahren wird auf Möglichkeiten der technischen Realisierung und Optimierung in kontinuierlichen Verfahren eingegangen. Dabei ist allgemein bekannt, dass z.B. bei der Herstellung von Polyurethanen und auch silanterminierten Polyurethanen die Steuerung der Reaktionsbedingungen einen ausgesprochen wichtigen Einfluss auf die Produktqualität hat. Ferner treten beim Scale-up derartiger Verfahren oftmals Probleme bei der Reproduzierbarkeit auf, da beispielsweise die Temperatursteuerung und die Vermischung der Reaktionspartner sich ändert.

Im Falle der Endterminierung mit Isocyanatosilanen sind neben der Schwankung bei der Polymerherstellung auch noch weitere Nebenreaktionen möglich, die zu einem Abbau des Isocyanatosilans führen können und damit oft eine geringe Funktionalisierung der Polymer zur Folge haben. Diese Effekte kann man zwar durch einen höheren Zusatz an Silan kompensieren, gleichzeitig wird damit aber die Einsatzmenge der Spezialsilane erhöht, was vielfach aus Kostengründen unerwünscht ist.

Es bestand nun die Aufgabe ein Verfahren zu entwickeln, das derartige Reaktionen kostengünstig möglich macht und die Produkte unabhängig von Scale-up Faktor in gleich bleibender Qualität hergestellt werden können.

Gegenstand der Erfindung ist ein kontinuierliches Verfahren zur Herstellung von Polymeren (A) mit Endgruppen der allgemeinen Formel (1)

(R¹)ₐ(R²)₃₋ₐ Si-X-A- (1)

durch polymeranaloge kontinuierliche Umsetzung von linearen Verbindungen, die Einheiten der allgemeinen Formel (2) enthalten,

(Y-)ₙ R⁴ (2)

mit Isocyanaten der allgemeinen Formel (3),

(R¹)ₐ(R²)₃₋ₐ Si-X-B (3)

wobei in einem zweiten Syntheseschritt Verbindungen der allgemeinen Formel (4)

Z-R⁷ (4)

zur Desaktivierung der Silanmonomere der allgemeinen Formel (3) zugesetzt werden ,
wobei
- **X**: eine zweibindige, gegebenenfalls mit Fluor-, Chlor-, Brom-, C₂ - C₆-Alkoxyalkyl- oder Cyanogruppen substituierte Alkylengruppe mit 1 - 10 Kohlenstoffatomen, die durch Ether, Ester- oder Amingruppen unterbrochen sein kann, oder eine chemische Bindung,
- **A**: eine zweibindige Bindegruppe -NH-CO-O-,
- **B**: eine Gruppe -N=C=O,
- Y: eine Gruppe HO,
- **R¹**: einen gegebenenfalls halogensubstituierten Kohlenwasserstoffrest mit 1-10 Kohlenstoffatomen,
- **R²**: einen Alkoxyrest -OR³, Acetoxyrest -O-CO-R³, Oximrest -O- N=C(R³)₂ oder Aminrest -NH-R³,
- **R³**: Wasserstoff, einen linearen, cyclischen oder verzweigten gegebenenfalls mit Heteroatomen substituierten Kohlenwasserstoffrest mit 1 - 18 Kohlenstoffatomen, einen mit nicht benachbarten Sauerstoffatomen unterbrochenen Alkylrest mit 1 - 18 Kohlenstoffatomen, einen Alkoxyrest - OR⁵ oder einen Acetoxyrest -O-CO-R⁵,
- **R⁴**: ein linearer, verzweigter oder vernetzer Polymerrest,
- **R⁵**: Wasserstoff oder einen linearen, cyclischen oder verzweigten gegebenenfalls mit Heteroatomen substituierten Kohlenwasserstoffrest mit 1 - 18 Kohlenstoffatomen,
- **a**: die Werte 0, 1, oder 2,
- **n**: ganzzahlige Werte von mindestens 1,
- **Z**: eine funktionelle Gruppe HO-, HS- oder H(R⁸)N- bedeuten und
- **R⁷,**: **R⁸** die Bedeutungen von **R⁵** aufweisen.

Mit dem erfindungsgemässen kontinuierlichen Verfahren werden überraschenderweise die notwendigen Einzelschritte für die Herstellung dieser Polymere auch in kontinuierlich arbeitenden Anlagen problemlos abgebildet.

Insbesondere wird mit dem erfindungsgemässen kontinuierlichen Verfahren eine gleichmäßigere Umsetzung der Ausgangstoffe erzielt. Dadurch wird ein hoher und gleichmäßiger Funktionalisierungsgrad erreicht. Dieser führt zu einer deutlich besseren und reproduzierbareren Vernetzung der Polymere. Damit werden beispielsweise die mechanischen Eigenschaften von gehärteten Formulierungen verbessert (höhere mechanische Festigkeiten, bessere Elastizitäten, insbesondere höhere Shore A-Härten, etc.). Andererseits kann man die verbesserten Eigenschaften auch nutzen, um die Bandbreite der Formulierung zu erhöhen. Für viele preissensitive Anwendungen sind die Kosten des polymeren Bindemittels von Bedeutung, da der Anteil in der Formulierung sehr hoch ist. Weil man hier durch Zusatz billigerer Additive und Füllstoffe noch ausreichend gute Eigenschaften einstellen kann, führt das verbesserte Eigenschaftsprofil der im erfindungsgemässen kontinuierlichen Verfahren hergestellten Polymere auch noch zu wirtschaftlichen Vorteilen.

Die Umsetzung kann gegebenenfalls in Anwesenheit von Katalysatoren und weiteren Hilfsstoffen zur Beschleunigung der Reaktion durchgeführt werden.

Die Polymere (A), die den Rest **R⁴** darstellen, können dabei aus unterschiedlichen Bausteinen aufgebaut sein. Üblicherweise sind dies Polysiloxane, Polysiloxan-Urea/Urethan-Copolymere, Polyurethane, Polyharnstoffe, Polyether, Polyester, Poly(meth)acrylate, Polycarbonate, Polystyrole, Polyamid, Polyvinylester oder Polyolefine wie z.B. Polyethylen, Polybutadien, Ethylen-Olefincopolymer oder Styrol-Butadiencopolymere. Selbstverständlich können auch beliebige Mischungen oder Kombinationen aus Polymeren mit unterschiedlichen Hauptketten eingesetzt werden.

Zur Herstellung der Polymere (A) eignen sich besonders aromatische und aliphatische Polyesterpolyole und Polyetherpolyole, wie sie in der Literatur vielfach beschrieben werden. Ferner eignen sich auf Basis diese Polyester- und Polyetherpolyolen hergestellt Polyurethane, durch Umsetzung mit gebräuchlichen Diisocyanaten wie Diisocyanatodiphenylmethan (MDI), sowohl in Form von rohem oder technischem MDI als auch in Form reiner 4,4' bzw. 2,4' Isomeren oder deren Mischungen, Tolylendiisocyanat (TDI) in Form seiner verschiedenen Regioisomere, Diisocyanatonaphthalin (NDI), Isophorondiisocyanat (IPDI) oder auch von Hexamethylendiisocyanat (HDI).

Besonders geeignet zur Herstellung der Polymere (A) sind zweiwertige Polyetherpolyole der allgemeinen Formel -(R⁶O)ₘ-, wobei R⁶ gleich oder verschieden sein kann und gegebenenfalls substituierte Kohlenwasserstoffreste, bevorzugt Methylen-, Ethylen- und 1,2-Propylenreste, bedeutet und m gleich einer ganzen Zahl von 7 bis 600, bevorzugt 70 bis 400, ist (wie z.B. solche käuflich erhältlich unter der Marke "Acclaim® 12200" von Bayer AG, Deutschland, "Alcupol® 12041LM" von Repsol, Spanien und "Poly L 220-10" von Arch Chemicals, USA).

Vorzugsweise bedeutet **X** einen gegebenenfalls halogensubstituierten Alkyl-, Cycloalkyl, Alkenyl oder Arylrest mit 1-10 Kohlenstoffatomen, insbesondere eine zweibindige Alkylengruppe mit 1 - 6 Kohlenstoffatomen, wie Methylen, Ethylen, n-Propylen.

Vorzugsweise bedeutet **R¹** einen Alkyl oder Arylrest mit 1-10 Kohlenstoffatomen, insbesondere 1 bis 4 Kohlenstoffatomen, wie Methyl, Ethyl, n-Propyl.

Vorzugsweise bedeutet **R²** eine Methoxy- oder Ethoxygruppe.

Vorzugsweise bedeutet **R³** einen linearen, cyclischen oder verzweigten Rest mit 1 - 8 Kohlenstoffatomen, insbesondere Alkylrest mit 1 bis 4 Kohlenstoffatomen, wie Methyl, Ethyl, n-Propyl.

Vorzugsweise bedeutet **R⁴** einen linearen Polymerrest. Vorzugsweise weist **R⁴** ein mittleres Molekulargewicht Mg von 100 bis 100000 auf, insbesondere von 500 bis 20000.

Vorzugsweise bedeutet n Werte von 2 bis 1000, insbesondere von 5 bis 100.

Vorzugsweise beteuden jeweils unabhängig von einander
- **X**: eine zweibindige Alkylengruppe mit 1 - 3 Kohlenstoffatomen,
- **R¹**: eine Methylgruppe
- **R²**: eine Methoxy- oder Ethoxygruppe und
- **R⁴**: einen linearen, verzweigten Polyether-, Polyester- oder Polyurethanrest.

Beispiele für Isocyanatosilane der allgemeinen Formel (3) sind Isocyanato-methyl-dimethylmethoxysilan, Isocyanato-propyldimethylmethoxysilan, Isocyanato-methyl-methyldimethoxysilan, Isocyanato-propyl-methyldimethoxysilan, Isocyanato-methyl-trimethoxysilan und Isocyanato-propyl-trimethoxysilan, wobei Isocyanato-methyl-methyldimethoxysilan, Isocyanato-propyl-methyldimethoxysilan, Isocyanato-methyl-trimethoxysilan und Isocyanato-propyl-trimethoxysilan bevorzugt und Isocyanato-methyl-methyldimethoxysilan und Isocyanato-propyl-methyldimethoxysilan besonders bevorzugt sind.

Der Desaktivator der allgemeinen Formel (4) kann aus einer Vielzahl von Verbindungen ausgewählt werden. Einzige Voraussetzung ist, dass die funktionellen Gruppen der Verbindung mit den Isocyanatgruppen der Silane in einer einfachen Reaktion abreagieren können. Typische Verbindung sind Alkohle wie z.B. Methanol, Ethanol, Isopropanol, Butanol oder höhere Alkohole, ferner Amine wie z.B. Methylamin, Ethylamin, Butylamin oder Dibutylamin.

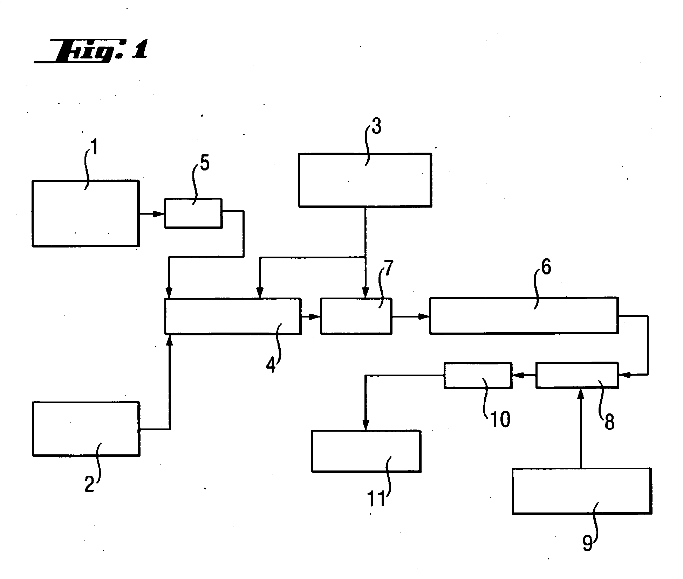

Das kontinuierliche Verfahren wird nachstehend beispielhaft mit Fig. 1 erläutert. Dabei wird ein polymerer Reaktionspartner, der Einheiten der allgemeinen Formel (2) enthält, z.B. ein OH-Gruppen haltiges Polypropylenglycol, erwärmt und mit Silan der allgemeinen Formel (3), z.B. Isocyanatosilan, in einem Mischer 4 homogen vermischt, durch Zudosieren eines Katalysators aktiviert und im Verweilzeitbehälter 6 zur Reaktion gebracht.

Bei dem erfindungsgemäßen Verfahren werden die polymeren Reaktionspartner, die Einheiten der allgemeinen Formel (2) enthalten, aus dem Vorratsbehälter 1 und die Silane der allgemeinen Formel (3) aus dem Vorratsbehälter 2, gegebenenfalls weitere Hilfsstoffe, wie Katalysatoren aus dem Vorratsbehälter 3, gegebenenfalls über eine geeignete Dosiereinrichtungen kontinuierlich in ein geeignetes Mischaggregat 4 gefördert. Zur Erhitzung der polymeren Reaktionspartner kann ein Wärmetauscher 5 dem Vorratsbehälter 1 nachgeschaltet sein. Von dem Mischaggregat 4 aus wird die Reaktionsmischung in eine geeignete Verweilzeiteinrichtung 6 gefördert. Die Hilfsstoffe können auch über einen separaten Mischer 7, der direkt vor der Verweilzeiteinrichtung 6 angeordnet ist, zugemischt werden.
Beim Durchlaufen der Reaktionszone in der Verweilzeiteinrichtung 6, die einen kontinuierlichen Reaktor darstellt, erreicht das Reaktionsgemisch die Reaktionstemperatur, reagiert ab und verlässt die Reaktionszone der Verweilzeiteinrichtung 6 wieder. Im Anschluss kann gegebenenfalls das Reaktionsgemisch in einem Mischaggregat 8 noch mit einem Deaktivator aus dem Vorratsbehälter 9 versetzt werden, um noch vorhandene überschüssige Monomere in der Verweilzeiteinrichtung 10 abreagieren zu lassen. Das Produkt kann im Folgenden noch weiteren Verfahrensschritten unterworfen werden, wie Destillation, Filtration etc. Anschließend wird das Produkt abgekühlt und aufgefangen im Produktbehälter 11.

Dieses Reaktionsprinzip kann sich mehrfach wiederholen, d. h. modularer ist Aufbau möglich. In jedem Reaktionsteil ist eine vom vorhergehenden Reaktionsteil unabhängige Reaktion möglich.

Bei katalytischen Verfahren ist eine Katalysatordosierung nötig. Der Katalysator kann dabei fest, flüssig oder in einem Lösemittel gelöst zudosiert werden. Die verwendeten Katalysatoren richten sich nach dem Reaktionstyp. Üblicherweise sind dies saure oder basische Verbindungen, Übergangsmetalle oder -metallkomplexe wie beispielsweise Platinverbindungen für die Hydrosilylierung, oder Katalysatoren, die für die Polyurethanherstellung eingesetzt werden, wie z.B. Dibutylzinndilaurat, Dioctylzinndilaurat, Dibutylzinndiacetylacetonat, Dibutylzinndiacetat oder Dibutylzinndioctoat etc., weiterhin Titanate, z.B. Titan(IV)isopropylat, Eisen(III)-Verbindungen, z.B. Eisen(III)-acetylacetonat, Zinkverbindungen wie Zinkacetylacetonat, Zink-2-ethylhexanoat, Zink-neodecanoat, oder Bismuthverbidnungen Bismuth-(2-ethylhexanoat), Bismuthneodecanoat und Bismuth-tetramethylheptandionat. Ferner auch Amine wie z.B. Triethylamin, Tributylamin, 1,4-Diazabicyclo-[2,2,2]octan, 1,8-Diazabicyclo[5.4.0]undec-7-en, 1,5-Diazabicyclo[4.3.0]non-5-en, N,N-Bis-(N,N-dimethyl-2-aminoethyl)-methylamin, N,N-Dimethylcyclohexylamin, N,N-Dimethylphenlyamin und N-Ethylmorpholinin.

Die Dosierung des Katalysators kann bei diesem Verfahren an verschiedenen Orten kontinuierlich erfolgen. Der Katalysator kann vor dem Mischaggregat 4, im Mischaggregat 4 oder nach dem Mischaggregat 4 in der Reaktionszone 6 zugegeben werden. In einer weiteren Variante kann der Katalysator erst nach dem Erreichen der gewünschten Reaktionstemperatur der Ausgangsmischung direkt in die Reaktionszone 6 kontinuierlich zugegeben werden. Die Katalysatordosierung kann durch geeignete Pumpsysteme vonstatten gehen. Geeignet Pumpsystem sind hierbei Mikropräzisionspumpen oder Kolbenpumpen. Die Mengen des zudosierten Katalysators kann z. B. über geeignete Massedurchflussmesser oder Waagen exakt bestimmt und geregelt werden. Zugegebene Katalysatormengen richten sich nach dem verwendeten Katalysatorsystem und liegen im Bereich von 10 ppm - 1 %, bevorzugt im Bereicht 10 ppm - 0,1 % besonders bevorzugt von 10 ppm - 200 ppm.

Weitere Hilfsstoffe für die Polymerherstellung können Additive zur Einstellung der Rheologie sein. Hier sind die unterschiedlichsten Lösungsmittel oder Weichmacher denkbar, soweit sie die Reaktion nicht beeinflussen oder selbst mit reagieren können. Ferner sind auch Additive denkbar, die das fertige Endprodukt in irgendeiner Weise stabilisieren. Typische Stoffe sind hier Lichtschutzmittel, Antioxidantien, Flammschutzmittel, Fungizide aber auch Wasserfänger und Reaktivverdünner bei Verwendung von reaktiven Silanmonomeren. Hier gilt ebenso, dass diese Stoffe weder die Katalyse noch die Herstellung des Polymere beeinflussen sollten. Die Zugabe der Hilfsstoffe kann an unterschiedlichen Stellen des Verfahren erfolgen.

Die Ausgangsstoffe können über Pumpen, Druckleitungen oder Saugleitungen kontinuierlich im benötigten Mengenverhältnis dosiert werden. Die Mengenerfassung kann dabei über Massedurchflussmessungen oder Waagen erfasst werden. Die Ausgangsstoffe können dabei vorzugsweise Temperaturen von -20 °C bis 200°C aufweisen. Die Silane der allgemeinen Formel (3) werden bevorzugt in einem Temperaturbereich von 0°C bis 60° und besonders bevorzugt bei 10°C bis 35°C eingesetzt. Die Polymeren mit Einheiten der allgemeinen Formel (2) werden bevorzugt in einem Temperaturbereich von 40°C bis 160°C und besonders bevorzugt in einem Temperaturbereich von 60 bis 120°C eingesetzt. Die Temperierung kann dabei z. B. im Vorratsbehälter oder durch eine beheizte Dosierleitung (Warmwasser, Dampfheizung, elektrische Heizung etc.) vorgenommen werden.

Die Dosierung der Ausgangsstoffe kann in eine Mischstrecke vor dem eigentlichen Mischaggregat 4 erfolgen oder direkt in das Mischaggregat 4 erfolgen. Diese Variante ist bevorzugt. Geeignete Mischstrecken sind z. B. Rohre mit statischen Mischern oder ein gerührter Kessel, der gegebenenfalls temperiert werden kann.

Bei der Verwendung von Druckleitungen und Pumpen kann der gesamte Durchflussprozess mit den Pumpen oder dem Leitungsdruck gesteuert werden, d. h. die Verweildauer der Ausgangsstoffe in der Reaktionszone 6 im kontinuierlichen Reaktor wird über die angelegte Pumpleistung oder dem Leitungsdruck bestimmt. Eine weitere Variante ist, das nach dem Mischaggregat 4 nochmals eine Pumpe geschaltet worden ist, die dann die Verweilcharakteristik der Mischung bestimmt.

Geeignete Mischaggregate 4 sind alle Aggregate, die eine genügend hohe Energiedichte in das System einbringen um die Ausgangsstoffe homogen ineinander zu verteilen. Dies sind zum Beispiel Planetenmischer, Pentaxmischer, Thoraxmischer, Dissolver, Kreiselpumpen etc. , d. h. alle Mischaggregate die z. B. auch für Emulsionsherstellung benützt werden können und für einen kontinuierlichen Betrieb ausgebaut sind. Ebenfalls geeignet sind Mikromischer mit einem Kanalquerschnitt von 1 Mikrometer bis hin zu eineigen mm. Die Temperatur im Mischaggregat kann dabei frei gewählt werden, bzw. stellt sich aufgrund der gewählten Temperatur der Ausgangmaterialien und des Energieeintrages des Mischaggregates von selbst ein und bewegt sich bevorzugt von 0° bis 250°C. Bevorzugt ist einem Temperaturbereich von 40°C bis 120°C, besonders bevorzugt ein Temperaturbereich von 60°C bis 100°C. Optional können die Mischaggregate zusätzlich auch temperierbar sein.

In der dem Mischaggregat 4 nachgeschalteten Verweilzeitstrecke kann eine weitere Durchmischung erfolgen, z. B. durch statische Mischer oder aktive Mischaggregate. Die aktiven Rührwerkzeuge können extern oder durch die vorbeiströmende Flüssigkeit angetrieben werden. Weitere Einrichtung für die Durchmischung sind z. B. fest eingebaute oder wechselbare Trombenstörer. Durchmischung kann auch durch eingesetzte Füllkörper erfolgen. Geeignete Füllkörper sind, z. B. Glaskugeln, Keramik oder Glashohlkörper, etc..

Verwendbar sind alle Reaktorgeometrien und Formen, wie dies z. b. in Kirk-Othmer, Encyclopedia of Chemical Technology, J. Wily 6 Sons, 4. Ausgabe, Band 20, Seite 1007 bis 1059 beschrieben sind. Besonders bevorzugt ist eine zylindrische Reaktorform, wobei das Verhältnis von Läge zu Durchmesser beliebig variieren kann, wie z. B. von 1 zu 10 bis 1 zu 2500 (Mikroreaktor). Die Stellung des Reaktors ist beliebig. Das Reaktormaterial kann von Metall über Stahl-Email bis hin zu Glas variieren.

Der Verweilzeitbehälter 6 kann vorzugsweise in einem Temperaturbereich von - 20°C bis 400°C betrieben werden. Besonders bevorzug in einem Bereich von 60°C bis 120°C. Die Temperierung kann über geeignete Temperiereinrichtungen erfolgen, wie Ölthermostaten, Dampfheizungen, Warmwasserheizung, elektrische Heizungen etc.

Der Verweilzeitbehälter 6 kann bei den oben angegebenen Betriebstemperaturen in einem absoluten Druckbereich von vorzugsweise 1 mbar bis 300 bar gefahren werden.

Der Durchsatz, d. h. der Durchfluss an Ausgangsstoffen bzw. Produkt pro Zeiteinheit kann von vorzugsweise 10 g/h bis 1000 kg/h je nach Reaktorgröße, Reaktionsparameter, Viskosität der Ausgangsstoffe bzw. Produkte, Reaktionstemperaturen und Reaktionskinetik variieren.

Dieser Durchfluss kann über die Pumpen, den Leitungsdruck oder frei einstellbare elektronische oder mechanische Regelventile an beliebigen Stellen des Verfahrens eingestellte werden. Optional kann nach Verweilzeitbehälter 6 ein weiterer gegebenenfalls kontinuierlicher Verweilzeitbehälter 10 anschließen in der weitere chemische Reaktionen wie z.B. auch die Desaktivierungsreaktion von reaktiven Silanmonomeren der allgemeinen Formel (3) wie oben beschrieben kontinuierlich durchgeführt werden können. Für diese nach geschalteten Verweilzeitbehälter 10 gelten die gleichen Spezifikation wie für die erste Verweilzeitbehälter 6 bezüglich Temperatur, Druck und Dosierung.

Die Produktqualität wird vorzugsweise über die kontinuierlich in-line Überwachung der Qualität der Ausgangmaterialien soweit nötig und der Reaktionsprodukte verfolgt. Dabei können unterschiedlichen Parameter untersucht bzw. gemessen werden. Geeignete Messmethoden sind alle, die in ausreichend kurzer Zeit die Rohstoffqualität und / oder den Umsatz der Reaktion detektieren können. Dies sind z. B. spektroskopische Verfahren, wie NIR-Spektroskopie, FT-IR-Spektroskopie und Raman-FT-Spektroskopie. Vorzugsweise wird der Umsatz der Reaktion kontrolliert. Beispielsweise kann der Restgehalt an Silanmonomeren der allgemeinen Formel (3) gemessen werden. Ein Beispiel hier ist die Kontrolle des Isocyanatgehalts bei Verwendung von Isocyanatoalkyl-alkoxysilanen.

Alle vorstehenden Symbole der vorstehenden Formeln weisen ihre Bedeutungen jeweils unabhängig voneinander auf.

In den folgenden Anwendungsbeispielen beziehen sich alle Angaben von Teilen und Prozentsätzen auf das Gewicht. Die Beispiele wurden bei einem Druck der umgebenden Atmosphäre, also etwa bei 1012 mbar, und bei Raumtemperatur, also etwa bei 21 °C, durchgeführt. Die Viskositäten wurden bei 25°C gemessen.

### Beispiele

### Beispiel 1, nicht erfindungsgemäss

### Herstellung des silanterminierten Polymers im Batch-Verfahren

### Reaktionsvorschrift:

40,72 kg eines alpha-omega-OH-terminierten Polypropylenglykols mit einer OH-Zahl von ca. 9,5 bzw. einem mittleren Molekulargewicht von ca. 12.000 a.u. (z.B. erhältlich unter der Marke Acclaim® Polyol 12200 N von der Bayer AG) werden in einem Edelstahlrührwerk mit Ankerrührer eingelegt und durch kurzes Erhitzen auf 80 °C erwärmt, anschließend durch vorsichtiges Evakuieren (schäumt leicht auf) und brechen des Vakuums mit Stickstoff, inertisiert. Anschließend werden aus einer Vorlage 1,360 kg Isocyanatomethyl-methyldimethoxysilan mit einem NCO-Gehalt von 25,5% (Titration - bei der Berechung der Einsatzmenge wird der NCO-Gehalt berücksichtigt; erhältlich unter der Marke GENIOSIL® XL 42 von der Wacker-Chemie GmbH) rasch zugegeben und die Mischung bei ca. 80°C 45 min homogenisiert. Danach werden 8,4 g einer Mischung von Bismuth-2-ethylhexanoat (erhältlich von ABCR GmbH & Co. KG) und Zink-2-ethylhexanoat (erhältlich von ABCR GmbH & Co. KG) im Verhältnis 3:1 über eine weitere Vorlage zugegeben. Da die Menge des Katalysators sehr gering ist, wird die Vorlage mit wenig Ethylacetat nachgespült.

Die Reaktionsmischung erwärmt sich nach Zugabe des Katalysators nur geringfügig (2-3°C). Die Mischung wird eine Stunde bei ca. 80 °C gerührt und die Umsetzung mittels IR-Spektroskopie verfolgt. Falls nach Ende der Reaktion noch Spuren an Isocyanat detektiert werden, wird dieses durch Zugabe von Methanol bei ca. 55 °C umgesetzt, um ein isocyanatfreies Endprodukt zu erhalten.

Wie die Messung des NCO-Gehalts vor Zugabe des Methanols zeigt, ergibt die Umsetzung relative schwankende Werte. Im Falle von 1b bleiben über 0,2 % Silan übrig, wohingegen im Falle 1c alles abreagiert. Die weist entweder auf eine unvollständige Umsetzung hin oder auf Nebenreaktionen, die zu einem Abbau des NCO-Silans führen (z.B. Cyanurat-, Biurethbildung).

Bestimmung der Eigenschaften der Polymere an drei Batch-Ansätzen:

| | 1a | 1b | 1c |
|---|---|---|---|
| **NCO-Titration Silan** | | | |
| NCO-Gehalt Silan | 24,0% | 23,6% | 25,1% |
| **NCO-Bestimmung Polymer IR-Methode** | | | |
| NCO-Restgehalt vor Methanol | 0,089% | 0,221% | <0,002% |
| NCO-Gehalt nach Methanol | <0,002% | <0,002% | <0,002% |
| **GPC (Polystyrolstandard)** | | | |
| Mw | 20800 g/mol | 20000 g/mol | 22800 g/mol |
| Mn | 18700 g/mol | 18000 g/mol | 19500 g/mol |
| Polydispersität | 1,1 | 1,1 | 1,2 |
| **Mechanische Prüfung nach DIN 53504** **Polymer + 1% Aminopropyltrimethoxysilan - ausgehärtet 14 Tage bei 23°C / 50 %rh** | | | |
| Shore A | 38 | 37 | 36 |
| Modul 50% | 0,57 N/mm² | 0,48 N/mm² | 0,51 N/mm² |
| Modul 100% | | 0,70 N/mm² | - |
| Reißfestigkeit | 0,7 N/mm² | 0,6 N/mm² | 0,6 N/mm² |
| Reißdehnung | 70% | 82% | 77% |

### Beispiel 2, erfindungsgemäß

### Herstellung des silanterminierten Polyethers nach dem kontinuierlichen Verfahren

### Reaktionsvorschrift - Verfahrensbeschreibung:

Über einen Fassheber mit angeschlossener Pumpe werden 18,6 kg/h eines alpha-omega-OH-terminierten Polypropylenglykols mit einer OH-Zahl von ca. 9,5 bzw. einem mittleren Molekulargewicht von ca. 12.000 a.u. (z.B. erhältlich unter der Marke Acclaim® Polyol 12200 N von der Bayer AG) in einen dynamischen Mischer (Fa. Pentax) direkt in die Mischkammer dosiert. Die Dosierung wird dabei über den Pumpendurchfluss geregelt. Aus einer zweiten Vorlage werden 0,65 kg/h Isocyanatomethylmethyldimethoxysilan mit einem NCO-Gehalt von 25,5% (Titration- bei der Berechung der Einsatzmenge wird der NCO-Gehalt berücksichtigt; erhältlich unter der Marke GENIOSIL® XL 42 von der Wacker-Chemie GmbH) gleichzeitig in die Mischkammer dosiert. Die Zuleitung in den Mischer befindet sich dabei kurz nach der Zuleitung für den Polyether. Die Dosierung wird über eine Pumpe mit Nadelventil eingestellt und gleichzeitig der zeitliche Verlauf des Gewichts der Vorlage überprüft. Die Mischung erwärmt sich dabei durch den Energieeintrag des dynamischen Mischers auf ca. 50 - 60 °C. Das Reaktionsgemisch wird anschließend in einem 25 l Rührwerk eingepumpt und dort auf ca. 80 - 90 °C getempert. Der Zulauf und der Ablauf im Rührwerk wird so eingestellt, dass sich nach Anfahren der Reaktion eine stabile Füllmenge von ca. 20 l einstellt. Um eine zusätzliche Vermischung zum dynamischen Mischer zu vermeiden, wird dieses Rührwerk nicht gerührt. Damit wird z.B. eine Rückvermischung weitgehend verhindert und nur die homogene Verteilung der Reaktanden im dynamischen Mischer ist dann ausschlaggebend für die Produkteigenschaften. Am Ausgang des Rührwerks befindet sich ein zweiter dynamischer Mischer (Fa. Lipp). In dieser Mischkammer wird nun die Katalysatormischung mit ca. 18 g/h eindosiert (Mischung von Bismuth-2-ethylhexanoat (erhältlich von ABCR GmbH & Co. KG) und Zink-2-ethylhexanoat (erhältlich von ABCR GmbH & Co. KG) im Verhältnis 3:1). Da die dosierte Menge des Katalysators sehr gering ist, wird hierzu eine HPLC-Dosierpumpe (z.B. Fa. Knauer) eingesetzt, da hier sehr kleine Dosierraten problemlos einstellbar sind. Die reaktive Mischung wird nun in einer beheizten Verweilzeitstrecke aus einem Edelstahlrohr mit ca. 18 m Länge und 1,5 Zoll Durchmesser und einem - ebenfalls nicht gerührten - Edelstahlrührwerk (40 Liter) zur Nachreaktion gebracht. Die Stoffströme und die Füllstände in den Rührwerken wurden so gewählt, dass die Verweilzeiten denen der Batch-Versuche gleichen. Am Ausgang des Edelstahlrührwerks ist eine Verfolgung der Reaktion durch Probenahme möglich. Falls im Ablauf noch Spuren an Isocyanat detektiert werden, können diese durch eine weitere Dosiermöglichkeit mit Methanol bei ca. 55 °C über einen Statikmischer noch umgesetzt werden, um auch hier ein isocyanatfreies Endprodukt zu erhalten.

Die Produkte aus der kontinuierlichen Fahrweise weisen im Vergleich zu den Batch-Ansätzen ein deutlich reproduzierbarere Umsetzung des NCO-Silans auf. In allen Fällen bleibt ein Restgehalt von ca. 0,1 % übrig, der deutlich weniger variiert als im Falle der Vergleichsbeispiele. Die Produkte zeigen tendenziell höhere Reißfestigkeiten und deutlich höhere Shore A-Härten. Letztere haben sich als ein sehr gutes Maß für die Vernetzungsreaktion der Polymere erwiesen.

Bestimmung der Eigenschaften der Polymere an fünf zeitlich aufeinanderfolgenden Proben bei kontinuierlicher Fahrweise:

| | *2a* | *2b* | *2c* | *2d* | *2e* |
|---|---|---|---|---|---|
| **NCO-Titration Silan** | | | | | |
| NCO-Gehalt Silan [%] | 24,8 | 24,6 | 23,6 | 25,3 | 25,3 |
| **NCO-Bestimmung Polymer IR-Methode** | | | | | |
| NCO-Restgehalt vor Methanol [%] | 0,115 | 0,112 | 0,105 | 0,089 | 0,149 |
| NCO-Gehalt nach Methanol [%] | <0,0016 | <0,002 | <0,002 | <0,002 | <0,0016 |
| **GPC (Polystyrolstandard)** | | | | | |
| Mw [g/mol] | 20400 | 20000 | 19900 | 21200 | 21300 |
| Mn [g/mol] | 16800 | 17600 | 17400 | 18800 | 18900 |
| Polydispersität | 1,2 | 1,1 | 1,1 | 1,1 | 1,1 |
| **Mechanische Prüfung nach DIN 53504** **Polymer + 1% Aminopropyltrimethoxysilan - ausgehärtet 14 Tage bei 23°C / 50 %rh** | | | | | |
| Shore A | 41 | 41 | 41 | 41 | 40 |
| Modul 50% [N/mm²] | 0,59 | 0,58 | 0,61 | 0,63 | 0,60 |
| Modul 100% | - | - | - | - | - |
| Reißfestigkeit N/mm² | 0,7 | 0,7 | 0,7 | 0,7 | 0,7 |
| Reißdehnung | 70% | 75% | 68% | 70% | 76% |

## Patentansprüche

1. Kontinuierliches Verfahren zur Herstellung von Polymeren (A) mit Endgruppen der allgemeinen Formel (1)
(R¹)ₐ(R²)₃₋ₐ Si-X-A- (1)
durch polymeranaloge kontinuierliche Umsetzung von linearen Verbindungen, die Einheiten der allgemeinen Formel (2) enthalten,
(Y-)ₙ R⁴ (2)
mit Isocyanatosilanen der allgemeinen Formel (3),
(R¹)ₐ(R²)₃₋ₐ Si-X-B (3)
wobei in einem zweiten Syntheseschritt Verbindungen der allgemeinen Formel (4)
Z-R⁷ (4)
zur Desaktivierung der Isocyanatosilane der allgemeinen Formel (3) zugesetzt werden ,
wobei
**X** eine zweibindige, gegebenenfalls mit Fluor-, Chlor-, Brom-, C₂ - C₆-Alkoxyalkyl- oder Cyanogruppen substituierte Alkylengruppe mit 1 - 10 Kohlenstoffatomen, die durch Ether, Ester- oder Amingruppen unterbrochen sein kann, oder eine chemische Bindung,
**A** eine zweibindige Bindegruppe -NH-CO-O-,
**B** eine Gruppe -N=C=O,
**Y** eine Gruppe HO,
**R¹** einen gegebenenfalls halogensubstituierten Kohlenwasserstoffrest mit 1-10 Kohlenstoffatomen,
**R²** einen Alkoxyrest -OR³, Acetoxyrest -O-CO-R³, Oximrest -O- N=C(R³)₂ oder Aminrest -NH-R³,
**R³** Wasserstoff, einen linearen, cyclischen oder verzweigten gegebenenfalls mit Heteroatomen substituierten Kohlenwasserstoffrest mit 1 - 18 Kohlenstoffatomen, einen mit nicht benachbarten Sauerstoffatomen unterbrochenen Alkylrest mit 1 - 18 Kohlenstoffatomen, einen Alkoxyrest - OR⁵ oder einen Acetoxyrest -O-CO-R⁵,
**R⁴** ein linearer, verzweigter oder vernetzer Polymerrest,
**R⁵** Wasserstoff oder einen linearen, cyclischen oder verzweigten gegebenenfalls mit Heteroatomen substituierten Kohlenwasserstoffrest mit 1 - 18 Kohlenstoffatomen,
**a** die Werte 0, 1, oder 2,
**n** ganzzahlige Werte von mindestens 1,
**Z** eine funktionelle Gruppe HO-, HS- oder H(R⁸)N- bedeuten und
**R⁷, R⁸** die Bedeutungen von **R⁵** aufweisen.

2. Verfahren nach Anspruch 1, bei dem **R⁴** ein mittleres Molekulargewicht Mg von 100 bis 100000 aufweist.

3. Verfahren nach Anspruch 1 und 2, bei dem n Werte von 2 bis 1000 bedeutet.

4. Verfahren nach Anspruch 1 bis 3, bei dem lineare Polymere der allgemeinen Formel (2) eingesetzt werden, bei denen **R⁴** einen Polyether-, Polyester- oder Polyurethanrest bedeutet.

5. Verfahren nach Anspruch 1 bis 4, bei dem **R¹** einen Alkyl oder Arylrest mit 1-10 Kohlenstoffatomen bedeutet.

6. Verfahren nach Anspruch 1 bis 5, bei dem **R²** eine Methoxy- oder Ethoxygruppe bedeutet.

7. Verfahren nach Anspruch 1 bis 6, bei dem **R³** einen Alkylrest mit 1 bis 4 Kohlenstoffatomen bedeutet.

## Claims

1. A continuous process for preparing polymers (A) having end groups of the general formula (1)
(R¹)ₐ(R²)₃₋ₐSi-X-A- (1)
by polymer-analogous continuous reaction of linear compounds which contain units of the general formula (2)
(Y-)ₙ R⁴ (2)
with isocyanatosilanes of the general formula (3)
(R¹)ₐ(R²)₃₋ₐ Si-X-B (3)
wherein, in a second synthesis step, compounds of the general formula (4)
Z-R⁷ (4)
are added to deactivate the isocyanatosilanes of the general formula (3),
where
**X** is a divalent alkylene group which is optionally substituted by fluorine, chlorine, bromine, C₂-C₆ alkoxyalkyl or cyano groups, has 1-10 carbon atoms and may be interrupted by ether, ester or amine groups or a chemical bond,
A is a divalent -NH-CO-O- link group,
B is an -N=C=O group,
Y is an HO group,
**R¹** is an optionally halogen-substituted hydro- carbon radical having 1-10 carbon atoms,
**R²** is an alkoxy radical -OR³, acetoxy radical -O-CO-R³, oxime radical -O-N=C(R³)₂ or amine radical -NH-R³,
**R³** is hydrogen, a linear, cyclic or branched hydrocarbon radical which is optionally substituted by heteroatoms and has 1-18 carbon atoms, an alkyl radical which is interrupted by nonadjacent oxygen atoms and has 1-18 carbon atoms, an alkoxy radical -OR⁵ or an acetoxy radical -O-CO-R⁵,
**R⁴** is a linear, branched or crosslinked polymer radical,
**R⁵** is hydrogen or a linear, cyclic or branched hydrocarbon radical which is optionally substituted by heteroatoms and has 1-18 carbon atoms,
**a** is 0, 1 or 2,
**n** is integers of at least 1,
**Z** is a functional HO-, HS- or H(R⁸)N- group and
**R⁷, R⁸** are each as defined for **R⁵.**

2. The process as claimed in claim 1, in which **R⁴** has a mean molecular weight Mg of from 100 to 100 000.

3. The process as claimed in claims 1 and 2, in which n is from 2 to 1000.

4. The process as claimed in claims 1 to 3, in which linear polymers of the general formula (2) in which **R⁴** is a polyether, polyester or polyurethane radical are used.

5. The process as claimed in claims 1 to 4, in which **R¹** is an alkyl or aryl radical having 1-10 carbon atoms.

6. The process as claimed in claims 1 to 5, in which **R²** is a methoxy or ethoxy group.

7. The process as claimed in claims 1 to 6, in which **R³** is an alkyl radical having from 1 to 4 carbon atoms.

## Revendications

1. Procédé continu pour la production de polymères (A) à groupes terminaux de formule générale (1)
(R¹)ₐ(R²)₃₋ₐSi-X-A- (1)
par réaction continue, conduisant à des polymères analogues, de composés linéaires qui contiennent des motifs de formule générale (2)
(Y-)ₙ R⁴ (2)
avec des isocyanatosilanes de formule générale (3),
(R¹)ₐ(R²)₃₋ₐSi-X-B (3)
dans lequel, dans une deuxième étape de synthèse on ajoute des composés de formule générale (4)
Z-R⁷ (4)
pour l'inactivation des isocyanatosilanes de formule générale (3),
X représentant un groupe alkylène à deux liaisons, ayant de 1 à 10 atomes de carbone, portant éventuellement des substituants fluoro, chloro, bromo, alcoxyalkyle en C₂-C₆ ou cyano, qui peut être interrompu par des groupes éther, ester ou amine, ou une liaison chimique,
**A** représente un groupe de liaison -NH-CO-O- à deux liaisons,
**B** représente un groupe -N=C=O,
**Y** représente un groupe HO,
**R¹** représente un radical hydrocarboné ayant de 1 à 10 atomes de carbone, éventuellement substitué par halogène,
**R²** représente un radical alcoxy -OR³, un radical acétoxy -O-CO-R³, un radical oxime -O-N=C(R³)₂ ou un radical amine -NH-R³,
**R³** représente un atome d'hydrogène, un radical hydrocarboné linéaire, cyclique ou ramifié, ayant de 1 à 18 atomes de carbone, éventuellement substitué par des hétéroatomes, un radical alkyle ayant de 1 à 18 atomes de carbone, interrompu par des atomes d'oxygène non contigus, un radical alcoxy -OR⁵ ou un radical acétoxy -O-CO-R⁵,
**R⁴** représente un radical polymère linéaire, ramifié ou réticulé,
**R⁵** représente un atome d'hydrogène ou un radical hydrocarboné linéaire, cyclique ou ramifié, ayant de 1 à 18 atomes de carbone, éventuellement substitué par des hétéroatomes,
**a** représente les valeurs 0, 1 ou 2,
**n** représente des nombres entiers valant au moins 1,
**Z** représente un groupe fonctionnel HO-, HS- ou H(R⁸)N- et
**R⁷, R⁸** ont les significations de **R⁵.**

2. Procédé selon la revendication 1, dans lequel **R⁴** présente une masse moléculaire moyenne Mg de 100 à 100 000.

3. Procédé selon les revendications 1 et 2, dans lequel n représente des nombres valant de 2 à 1 000.

4. Procédé selon les revendications 1 à 3, dans lequel on utilise des polymères linéaires de formule générale (2) dans lesquels **R⁴** représente un radical polyéther, polyester ou polyuréthanne.

5. Procédé selon les revendications 1 à 4, dans lequel **R¹** représente un radical alkyle ou aryle ayant de 1 à 10 atomes de carbone.

6. Procédé selon les revendications 1 à 5, dans lequel **R²** représente un groupe méthoxy ou éthoxy.

7. Procédé selon les revendications 1 à 6, dans lequel **R³** représente un radical alkyle ayant de 1 à 4 atomes de carbone.
